# EUROPÄISCHE PATENTANMELDUNG

(11) **EP 4 049 978 A1**
(43) Veröffentlichungstag der Anmeldung: **31.08.2022**
(21) Anmeldenummer: 22157931.1
(22) Anmeldetag: 22.02.2022
(51) Int. Cl.: C02F 1/44, C02F 1/00, C02F 9/00, E03C 1/10, E03B 7/07, B01D 61/02, B01D 61/10, B01D 61/12, B01D 61/04, C02F 1/28, C02F 1/32

(54) **WASSERAUFBEREITUNGSANLAGE, INSBESONDERE FÜR TRINKWASSER**

(30) Priorität: 25.02.2021 DE 102021104525
(71) Anmelder: Pfander, Markus, 71272 Renningen (DE)
(72) Erfinder: Pfander, Markus, 71272 Renningen (DE)
(74) Vertreter: Patentanwälte Mammel und Maser PartG mbB

(57) **Zusammenfassung**

Die Erfindung betrifft eine Wasseraufbereitungsanlage, insbesondere für Trinkwasser, welche aus einer Sicherungseinrichtung (12) zum Schutz von Trinkwasser gegen Verschmutzung durch Rückfließen und einer Umkehrosmose-Anlage (52) zur Aufbereitung der Trinkwasserqualität besteht, wobei die Sicherheitseinrichtung (12) umfasst: ein Gehäuse (14), welches einen Einlass (15) zum Anschluss an ein Trinkwassernetz und einen Auslass (35) aufweist, einen in dem Gehäuse (14) vorgesehenen freien Auslauf (21), dessen Zulauf (22) mit dem Einlass (15) verbunden ist und dessen Auslauf (25) zu einer Pumpe (30) führt, welche das in dem freien Auslauf (21) drucklos bevorratete Speisewasser in einen Druckausgleichsbehälter (33) pumpt und mit Druck beaufschlagt, und eine vom Druckausgleichsbehälter (33) zum Auslass (35) führende Leitung (34), wobei die Umkehrosmose-Anlage (52) umfasst: eine Zuführleitung (44), welche über zumindest einen Vorfilter (54, 55, 56) zu einem Membrangehäuse (58) mit einer Membran führt, ein aus dem Membrangehäuse (58) herausführender Ablauf (59) zum Abführen von Abwasser und eine aus dem Membrangehäuse (58) abführende Permeatleitung (64) zum Abführen eines Permeats zu einem Vorratsbehälter (67) und/oder einem Verbraucher (71), wobei die Sicherungseinrichtung (12) und die Umkehrosmose-Anlage (52) durch einen Druckschalter (38) steuerbar sind, welcher einen Druck in der Permeatleitung (64) erfasst.

## Beschreibung

Die Erfindung betrifft eine Wasseraufbereitungsanlage, insbesondere für Trinkwasser, mit einer Sicherungseinrichtung zum Schutz des Trinkwassers gegen Verschmutzung durch Rückfließen sowie eine Umkehrosmose-Anlage zur Aufbereitung der Trinkwasserqualität.

Zum Schutz des Trinkwassers vor Verunreinigungen in Trinkwasser-Installationen müssen Kleinstwasserbehandlungsgeräte (wie z.B. Umkehrosmose-Anlagen, Ionenaustauscher-Systeme, Aktivkohle- und Feinfiltergeräte < 80 µm), Sterilisatoren für Labor- und Dampfdesinfektion und Zahnarztbehandlungsstühle die allgemeinen Anforderungen der DIN EN 1717 und der DIN 1988-100 erfüllen.

Die DIN EN 1717 "Schutz des Trinkwassers vor Verunreinigungen in Trinkwasser-Installationen und allgemeine Anforderungen an Sicherungseinrichtungen zur Verhütung von Trinkwasserverunreinigungen durch Rückfließen; Deutsche Fassung EN 1717:2000; Technische Regel des DVGW" und die DIN 1988-100 "Technische Regeln für Trinkwasser-Installationen - Teil 100: Schutz des Trinkwassers, Erhaltung der Trinkwassergüte; Technische Regel des DVGW", die beide gemeinsam anzuwenden sind, stellen allgemeine Anforderungen an eine Sicherungseinrichtung zur Verhütung von Trinkwasserverunreinigungen durch Rückfließen.

Innerhalb dieser Geräte besteht die latente Gefahr einer Verkeimung und daher wird das Wasser in diesen Systemen nach DIN EN 1717 und DIN 1988-100 der Flüssigkeitskategorie 5 zugeordnet. Deshalb dürfen diese Systeme nur über eine Sicherungseinrichtung an die Trinkwasser-Installation angeschlossen und betrieben werden. Diese Sicherungseinrichtungen sind mit einem freien Auslauf der Familie A, Typ A, der Familie A, Typ B oder der Familie A, Typ D auszubilden.

Allgemein wird ein freier Auslauf in der DIN EN 1717: 2011-08 wie folgt definiert: "Ein freier Auslauf ist eine ständig ungehinderte freie Fließstrecke, entweder außerhalb oder innerhalb des versorgten Apparates/Behälters zwischen der zulaufseitigen Austrittsöffnung der Trinkwasser-Installation und dem ablaufseitigen Prozessfluids, gemessen bei maximalen Betriebswasserspiegel." Dabei wird an die Funktion folgende Anforderungen gestellt: "Das Rückfließen von verunreinigter Flüssigkeit in die Trinkwasser-Installation ist durch die ständig ungehinderte freie Fließstrecke zu verhindern." (DIN EN 1717:2011,08, Seite 17)

Dieser freie Auslauf umfasst einen Zulauf in einen Behälter, wobei dessen Austrittsöffnung oberhalb und getrennt zu einem Betriebswasserspiegel in dem Behälter liegen muss. Zur Regulierung der Höhe des Betriebswasserspiegels ist eine Abschalteinrichtung vorgesehen, so dass zwischen dem kritischen Wasserspiegel und der Austrittsöffnung des Zulaufs mindestens ein Abstand verbleibt, der bei einem freien Auslauf der Familie A, Typ B dem zweifachen des Innendurchmessers des Zuleitungsrohres entspricht jedoch mindestens 20 mm beträgt. Der kritische Wasserspiegel ist bei einem freien Auslauf mit nicht kreisförmigem Überlauf (uneingeschränkt) der Familie A, Typ B gemäß DIN EN 13077: 2018-06 (Seite 6) wie folgt definiert: "Physikalische oder piezometrische Höhe, die die Flüssigkeit in einem beliebigen Teil der Einrichtung 2 s nach dem Schließen des Wasserzulaufs, ausgehend vom maximalen Wasserspiegel, erreicht." Dabei ist der maximale Wasserspiegel der Überlauf-Wasserspiegel im nicht kreisförmigen und eingeschränkten Überlauf des Vorratsbehälters. Bei einem freien Auslauf der Familie A, Typ A ist der kritische Wasserspiegel der maximale Wasserspiegel, der bei Überlauf erreicht wird.

Die Anforderungen an eine solche Sicherungseinrichtung ist gemäß der DIN 1988-100 in Verbindung mit der DIN EN 1717 dann erfüllt, wenn Sicherheitsarmaturen verwendet werden, deren Eignung beispielsweise durch ein DVGW-Zertifizierungszeichen nachgewiesen ist. Apparate, bei denen nicht nachgewiesen ist, dass deren Inhalt nicht in die Trinkwasser-Installation zurückfließen kann, dürfen nur unter Zwischenschaltung von solchen geprüften Sicherungseinrichtungen an die Trinkwasser-Installation angeschlossen werden.

Bisher bekannte Wasseraufbereitungsgeräte, wie beispielsweise Umkehrosmose-Anlagen oder Ionenaustauscher-Systeme werden oftmals direkt an das Trinkwassernetz angeschlossen. Zwischen dem Trinkwassernetz und der Wasserbehandlungsgeräte wird häufig ein Absperrhahn vorgesehen, der zumeist dauerhaft geöffnet ist und nur im Service-Falle des Wasserbehandlungsgerätes geschlossen wird. Zusätzlich ist in manchen Absperrventilen auch ein Rückschlagventil integriert oder wird zusätzlich ein Rückschlagventil in den Zuleitungsschlauch installiert. Dennoch kann es bei dieser nicht konformen Betriebsweise aufgrund eines Druckabfalls im Trinkwassernetz zu einem Rücksaugen oder Rückdrücken oder bei einem längeren Stillstand des Wasserbehandlungsgerätes zu einer Verkeimung innerhalb des Gerätes kommen, wodurch das Trinkwasser durch Bestandteile der Wasseraufbereitungsgeräte durch Keime kontaminiert werden kann.

Der Erfindung liegt die Aufgabe zugrunde, eine Wasseraufbereitungsanlage sowie ein Verfahren zur Aufbereitung von Wasser, insbesondere Trinkwasser, vorzuschlagen, welche beziehungsweise welches einen sicheren Betrieb ermöglicht und Wasserverunreinigungen, insbesondere Trinkwasserverunreinigungen, durch ein Rückfließen aus der Wasseraufbereitungsanlage verhindert.

Diese Aufgabe wird durch eine Wasseraufbereitungsanlage gemäß den Merkmalen des Anspruchs 1 gelöst, welche eine Sicherungseinrichtung und eine Umkehrosmose-Anlage umfasst. Die Sicherungseinrichtung umfasst ein Gehäuse, in welchem ein Einlass zum Anschließen an ein Trinkwassernetz und ein Auslass zum Anschluss einer Umkehrosmose-Anlage vorgesehen ist. In dem Gehäuse der Sicherungseinrichtung ist ein freier Auslauf vorgesehen, dessen Zulauf mit dem Einlauf verbunden ist und dessen Ablauf zu einer elektrischen Pumpe führt, welche das in dem freien Auslauf drucklos bevorratete Speisewasser, auch Betriebswasser genannt, ansaugt und in einen Druckausgleichsbehälter pumpt. Dieser Druckausgleichsbehälter ist mit einer Versorgungsleitung mit dem Auslass der Sicherungseinrichtung verbunden. Die Umkehrosmose-Anlage umfasst eine Zuführleitung, welche über zumindest einen Vorfilter zu zumindest einem Membrangehäuse mit einer Membran führt. An dem Membrangehäuse ist ein herausführender Ablauf zum Abführen von Abwasser und eine herausführende Permeatleitung vorgesehen, die zu einem Vorratsbehälter und/oder einem Verbraucher führt. Des Weiteren ist vorgesehen, dass ein Druckschalter einen in der Permeatleitung anliegenden Druck erfasst und die Sicherungseinrichtung und die Umkehrosmose-Anlage steuert. Dieser Druckschalter in der Permeatleitung übernimmt die Steuerung der Sicherungseinrichtung und der Umkehrosmose-Anlage. Diese Wasseraufbereitungsanlage weist den Vorteil auf, dass durch den freien Auslauf die Anforderungen zum Schutz des Trinkwassers gegen Verschmutzung durch Rückfließen erfüllt ist. Des Weiteren weist diese Wasseraufbereitungsanlage den Vorteil auf, dass ein kompakter und kostengünstiger Aufbau durch die Kombination der Sicherungseinrichtung und der Umkehrosmose-Anlage ermöglicht ist.

Bevorzugt wird die Sicherungseinrichtung mit einer sicheren Niederspannung von 24 V AC oder V DC betrieben. Dadurch kann auf eine CE-Kennzeichnung verzichtet werden.

Bevorzugt ist vorgesehen, dass beim Erreichen eines Solldruckwerts in der Permeatleitung, insbesondere in einem Abschnitt der Permeatleitung zwischen einem dem Membrangehäuse stromab liegenden Rückschlagventil und einem Ventil oder einem T-Verbindungsanschluss in der Permeatleitung, welche zum Vorratsbehälter führt und diesen mit dem Verbraucher verbindet, die Pumpe stillgesetzt wird. Diese Anordnung ermöglicht, dass nach dem Stillstand der Pumpe nur ein geringer Anteil der Wasseraufbereitungsanlage unter einem erhöhten Druck von beispielsweise ca. 4,2 bar steht. Somit steht bevorzugt nur ein Leitungsabschnitt der Permeatleitung, der sich von dem Rückschlagventil des Membrangehäuses bis zum Verbraucher bzw. Vorratsbehälter erstreckt, unter Druck, der maximal in Höhe des Abschaltdruckes des Druckschalters liegt, der insbesondere zwischen 4,1 und 4,3 bar liegen kann. Die weitere Wasseraufbereitungsanlage wird drucklos, wodurch sich die Gefahr der Leckage erheblich minimiert. Darüber hinaus sinkt eine dauerhafte Druckbelastung aller Komponenten, beispielsweise während den Stillstandzeiten über das Wochenende oder in Urlaubszeiten.

Des Weiteren ist bevorzugt vorgesehen, dass bei einem geschlossenen Verbraucher und einem vollen Vorratsbehälter der Druckschalter nach Erreichen des Solldruckwerts in der Permeatleitung die Pumpe stillsetzt.

Dadurch schaltet sich die gesamte Wasseraufbereitungsanlage selbständig ab, sobald der Verbraucher ausgeschaltet ist oder wird und der Vorratsbehälter befüllt ist. Ein zusätzliches Ausschalten der Wasseraufbereitungsanlage ist nicht erforderlich.

Des Weiteren ist bevorzugt vorgesehen, dass nach dem Abschalten der Pumpe durch den Druckschalter ein wesentlicher Teil der Wasseraufbereitungsanlage sich entleert. Dabei kann das in dem Druckausgleichsbehälter der Sicherungseinrichtung gespeicherte und unter Druck stehende Speisewasser über den Auslass der Sicherungseinrichtung und dem zumindest einen Vorfilter sowie das Membrangehäuse der Umkehrosmose-Anlage über den Abwasserablauf abfließen. Die Wasseraufbereitungsanlage ist dann in einem Bereich zwischen einer Auslauflanze des freien Auslaufs bis zum Membrangehäuse drucklos. Nur der Bereich vom Anschluss der Sicherungseinrichtung an das Trinkwassernetz bis zum Schwimmerventil ist unter Druck des jeweiligen Leitungswasserdruckes.

Des Weiteren ist bevorzugt vorgesehen, dass der Druckschalter in dem Gehäuse der Sicherungseinrichtung vorgesehen ist und die Permeatleitung der Umkehrosmose-Anlage an einen Eingang und einen Ausgang im Gehäuse der Sicherungseinrichtung anschließbar ist, zwischen dem der Druckschalter sitzt. Diese Anordnung weist den Vorteil auf, dass die Sicherungseinrichtung in kompakter Weise ausgebildet und der Druckschalter geschützt im Gehäuse der Sicherungseinrichtung vorgesehen ist. Außerdem kann die elektrische Verkabelung des Druckschalters mit der Druckerhöhungspumpe und den sonstigen elektrischen Komponenten der Sicherungseinrichtung wesentlich vereinfacht sein. Darüber hinaus kann die Umkehrosmose-Anlage mit einer erheblich reduzierten Anzahl an Bauteilen ausgebildet sein. Dies ermöglicht die Konstruktion und den Bau von sehr kompakten und kostengünstigen Umkehrosmose-Anlagen.

Vorteilhafterweise ist zwischen dem Druckschalter in der Permeatleitung und dem Membrangehäuse ein Rückschlagventil vorgesehen, welches einen Durchgang in Richtung auf das Membrangehäuse schließt. Dieses Absperrorgan, insbesondere ein Rückschlagventil, dient zum Schutz der Umkehrosmose-Anlage, um ein Rückfließen vom im Vorratsbehälter gespeicherten Permeat in das Membrangehäuse zu verhindern.

Im Ablauf des Membrangehäuses ist bevorzugt ein Durchflussbegrenzer vorgesehen. Dadurch wird das Verhältnis zwischen Permeat und Abwasser (auch Wirkungsgrad genannt) gesteuert. Optional ist vorgesehen, dass stromab zum Durchflussbegrenzer ein Rückschlagventil vorgesehen ist, welches einen Durchgang in Richtung auf das Membrangehäuse sperrt. Dies ist eine weitere Sicherheitsvorkehrung zur Verhütung eines Rückdrückens von Abwasser aus dem Abwasserkanal in das Membrangehäuse und dadurch einer latenten Gefahr einer Verkeimung des Permeats.

Die Umkehrosmose-Anlage umfasst bevorzugt mehrere Filter, wobei insbesondere ein Sedimentfilter mit einem Grobfiltersieb, ein Aktivkohlefilter und ein Sedimentfilter mit einem Feinfiltersieb in Reihe geschalten sind. Alternativ hierzu können auch weniger oder auch mehr-Filterstufen vorgesehen sein, um das Speisewasser zu reinigen, bevor es dem Membrangehäuse zugeführt wird.

Bevorzugt ist vorgesehen, dass die Umkehrosmose-Anlage frei von elektrischen Komponenten ist. Dies weist den Vorteil auf, dass beispielsweise keine CE-Kennzeichnung erforderlich ist. Darüber hinaus kann ein vereinfachter Aufbau und somit ein kostengünstiger Aufbau einer Umkehrosmose-Anlage erzielt werden. Zusätzlich wird auch kein hydraulisches Abschaltventil (ASOV - automatic shut-off valve), wie bei klassischen Umkehrosmose-Anlagen zwingend erforderlich, mehr benötigt.

Gemäß einer alternativen Ausführungsform der Wasseraufbereitungsanlage kann vorgesehen sein, dass der Druckschalter außerhalb des Gehäuses der Sicherungseinrichtung in der Permeatleitung zwischen dem Rückschlagventil des Membrangehäuses einerseits und dem Vorratsbehälter und Verbraucher andererseits anschließbar ist und dass von dem Druckschalter eine elektrische Steuerleitung zum Gehäuse der Sicherungseinrichtung führt, durch welche die Druckerhöhungspumpe abschaltbar ist. Diese Anordnung weist den Vorteil auf, dass bei der Sicherungseinrichtung am Gehäuse sowohl ein Eingang als auch ein Ausgang entfallen kann.

Nach einer alternativen Ausführungsform kann die Umkehrosmose-Anlage aber auch ganz in das Gehäuse der Sicherungseinrichtung integriert werden. Bei einer solchen Anordnung kann an dem Gehäuse ein Einlass zum Zuführen von Trinkwasser sowie ein Auslass zum Abführen von Abwasser als auch ein Auslass vorgesehen sein, an welchem die zum Verbraucher und Vorratsbehälter führende Permeatleitung anschließbar ist.

Eine weitere bevorzugte Ausgestaltung der Sicherungseinrichtung sieht an dem Gehäuse eine Anzeige für einen Betriebszustand der Sicherungseinrichtung, für einen Schaltzustand des freien Auslaufs, für einen anliegenden Druck des Trinkwassers, für einen Betriebszustand der Pumpe und/oder einen Füllstand des Druckausgleichsbehälters vor. Dadurch kann für den Benutzer eine einfache Erfassung und Überprüfung des aktuellen Zustands der Sicherungseinrichtung ermöglicht werden.

Nach einer weiteren bevorzugten Ausgestaltung der Sicherungseinrichtung ist zwischen dem Auslass und einem Anschluss für das Wasseraufbereitungsgerät ein Ablassventil vorgesehen. Dadurch kann eine kontrollierte Entleerung des angeschlossenen Wasseraufbereitungsgeräts vor der Demontage oder vor einem Anschluss eines neuen oder anderweitigen Wasseraufbereitungsgerätes ermöglicht sein.

Die der Erfindung zugrundeliegende Aufgabe wird des Weiteren durch ein Verfahren zum Aufbereiten von Wasser, insbesondere Trinkwasser gelöst, bei welchem das Wasser, insbesondere Trinkwasser, durch eine Wasseraufbereitungsanlage nach einer der vorbeschriebenen Ausführungsformen aufbereitet wird.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Darstellung einer Wasseraufbereitungsanlage,
- Figur 2: eine schematische Darstellung einer alternativen Ausführungsform der Wasseraufbereitungsanlage gemäß Figur 1, und
- Figur 3: eine schematische Darstellung einer weiteren alternativen Ausführungsform der Wasseraufbereitungsanlage gemäß Figur 1.

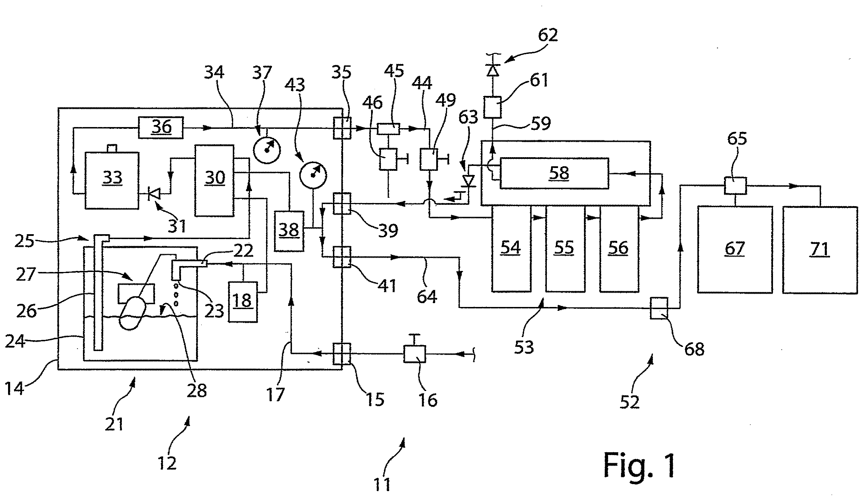

In Figur 1 ist eine schematische Ansicht einer Wasseraufbereitungsanlage 11 dargestellt. Diese Wasseraufbereitungsanlage 11 umfasst eine Sicherungseinrichtung 12 zum Schutz von Trinkwasser gegen Verschmutzung durch Rückfließen. Des Weiteren umfasst diese Wasseraufbereitungsanlage 11 eine Umkehrosmose-Anlage 52 zur Aufbereitung der Wasserqualität. Die Sicherungseinrichtung 12 und die Umkehrosmose-Anlage 52 sind bevorzugt über farbcodierte Druckschläuche, welche jeweils in die Anschlüsse der Sicherungseinrichtung 12 und Umkehrosmose-Anlage gesteckt werden, miteinander gekoppelt, werden jedoch durch Anschlüsse, wie nachfolgend noch beschrieben sein wird, voneinander getrennt angeliefert und zusammengebaut. Der modulare Aufbau der Wasseraufbereitungsanlage 12 gemäß Figur 1, das service- und bedienerfreundliche Design, die Verwendung von farbcodierten Druckschläuchen und die Empfehlung von Steckschlauchverbindern, insbesondere Quick-Connect-Schlauchverbinder, ermöglichen eine schnelle, einfache und flexible Installation, eine einfache Bedienung und einen einfachen Service. Dabei können die Sicherungseinrichtung 12 und die Umkehrosmose-Anlage 52 auch mehrere Meter voneinander getrennt installiert werden. Dies ergibt für den Anwender eine große Flexibilität in der Wahl des Aufstellungsortes. So kann beispielsweise die Sicherungseinrichtung 12 auf einer Arbeitsplatte und die Umkehrosmose-Anlage 52 unterhalb der Arbeitsplatte oder auch umgekehrt installiert werden.

Die Sicherungseinrichtung 12 umfasst ein Gehäuse 14, in welchem ein Einlass 15 zum Anschluss an ein Trinkwassernetz vorgesehen ist. Vorteilhafterweise kann stromauf des Einlasses 15 noch ein Absperrventil 16 vorgesehen sein. Von dem Einlass 15 führt eine Leitung 17 zu einem freien Auslauf 21. Vorzugsweise ist zwischen dem Einlass 15 und dem freien Auslauf 21 ein Druckschalter 18 vorgesehen. Dieser Druckschalter 18 überprüft einen anstehenden Druck aus dem Trinkwassernetz. Bei einem Absinken des Drucks im Trinkwassernetz unter einem im Druckschalter 38 definierten Mindestdruck, der beispielsweise ca. 0,8 barbetragen kann oder bei einem kompletten Ausfall der Trinkwasserversorgung, kann eine dem freien Auslauf 21 nachgeschaltete Pumpe 30 stillgesetzt werden. Dadurch wird ein Trockenlaufen der Pumpe 30 verhindert. Dieser Druckschalter 38 kann auch für die Schaltung einer optionalen LED-Betriebskontrollleuchte zur visuellen Leitungswasserkontrolle dienen.

Der freie Auslauf 21 umfasst einen Zulauf 22 mit einem Mengenregler, der das Trinkwasser über eine Austrittsöffnung 23 des Zulaufs 22 in einen Wasservorratsbehälter 24 überführt. In dem Behälter 24 ist ein Auslauf 25 vorgesehen. Dieser Auslauf 25 umfasst eine Auslauflanze 26, deren Eintrittsöffnung nahe am Boden des Behälters 24 liegt und deren Austrittsöffnung außerhalb des Behälters 24, insbesondere oberhalb des Zulaufs 22, vorgesehen ist. Alternativ kann der Auslauf 25 auch am Behälter 24 knapp oberhalb des Behälterbodens angebracht werden. In dem Behälter 24 ist ein Schwimmersystem 27, vorzugsweise eine mechanische Schwimmereinrichtung vorgesehen, durch welches ein Betriebswasserspiegel 28 in dem Behälter 24 überwacht wird. Dabei wird der Zulauf 22 ab einer vorbestimmten Höhe des Betriebswasserspiegels 28, vorzugsweise durch eine zunehmende, nicht schlagartige Schließbewegung abgeschaltet. Zwischen dem maximalen Betriebswasserspiegel 28 und der Austrittsöffnung 23 des Zulaufs 22 muss ein Mindestabstand verbleiben, so dass eine Entkopplung zu dem im Behälter 24 bevorrateten Speisewasser und der Trinkwasserleitung gegeben ist.

Über die Pumpe 30, welche bevorzugt eine elektrische Saugpumpe ist, wird das im Behälter 24 gesammelte Speisewasser angesaugt und nachfolgend einem Druckausgleichsbehälter 33 zugeführt. Dieser Druckausgleichsbehälter 33 ermöglicht, dass durch die Pumpe 30 veranlasste Druckstöße in der Wasseraufbereitungsanlage 11 verhindert werden. Dadurch können schlagende Druckschläuche verhindert werden. Zwischen der Pumpe 30 und dem Druckausgleichsbehälter 33 ist bevorzugt in Rückschlagventil 31 vorgesehen, so dass über den Druckausgleichsbehälter 33 kein Druck auf die Pumpe 30 zurückwirkt und dadurch das Speisewasser wieder in den Behälter 24 zurückfließt und dieser dann evtl. überlaufen kann. Diese Pumpe 30 ist bevorzugt als eine Druckerhöhungspumpe ausgebildet, um das im Behälter 24 mit Umgebungsdruck vorliegende Speisewasser im Bereich des Druckausgleichsbehälters 33 bis zum Eingang des Membrangehäuses 58 auf einen Druckbereich zwischen 4 bis max. 8 bar zu erhöhen. Umkehrosmose-Anlagen 52 benötigen im Vergleich zu anderen Kleinstwasserbehandlungsgeräten für den Betrieb einen Betriebsdruck von mindestens 3 bar. Je höher der Betriebsdruck desto höher die Produktionsrate der Umkehrosmose-Membran, desto besser ist der Wirkungsgrad und desto höher die Reinheit des Permeats.

Ausgehend von dem Druckausgleichsbehälter 33 führt eine weitere Leitung 34 zum Auslass 35 am Gehäuse 14. Vorzugsweise ist zwischen dem Druckausgleichsbehälter 33 und dem Auslass 35 zumindest ein Filter 36 vorgesehen. Bei diesem Filter 36 kann es sich beispielsweise um einen Sedimentfilter und/oder Aktivkohlefilter und/oder eine UV-Lampe und/oder Bakterienfilter handeln. Dadurch können evtl. vorhandene Verunreinigungen im Speisewasser entfernt werden. Bevorzugt ist zwischen dem Filter 36 und dem Auslass 35 ein Manometer 37 am Gehäuse 14 vorgesehen, welcher den Arbeitsdruck der Pumpe 30 anzeigt. Diese Information ist beispielsweise im Service-Fall sehr wichtig.

Die Sicherungseinrichtung 12 umfasst des Weiteren einen Druckschalter 38, der zwischen einem Eingang 39 und einem Ausgang 41 am Gehäuse 14 angeordnet ist. Dieser Druckschalter 38 überwacht den Druck in einer zum Vorratsbehälter 67 und/oder Verbraucher 71 führenden Permeatleitung 64. Insbesondere kann der Druck des angeschlossenen Vorratsbehälters 67 überwacht werden. Dieser Druckschalter 38 und die Pumpe 30 stehen mit einer elektrischen Leitung in Verbindung. Der Druckschalter 38 schaltet bei einem definiertem Rückschaltpunkt die Pumpe 30 ein und bei Erreichen eines Abschaltpunktes wieder aus. Eine optionale LED-Betriebskontrollleuchte zeigt dem Anwender an, ob die Sicherungseinrichtung 12 produziert und Speisewasser zur Umkehrosmose-Anlage 52 pumpt oder stillsteht. Durch die Definition des Abschaltpunktes des Druckschalters 38, der insbesondere bei einem Abschaltdruck zwischen 4,1 und 4,3 bar liegt, kann das maximale Volumen im angeschlossenen Vorratsbehälter 67 bestimmt werden. Die Hysterese bzw. der Rückschaltpunkt des Druckschalters 38 bestimmt dann, bei welchem Volumen im Vorratsbehälter die Pumpe 30 wieder eingeschalten wird und daraufhin die Nachproduktion des Permeats beginnt. Bevorzugt ist ein Manometer 43 am Gehäuse 14 vorgesehen, welcher den am Druckschalter 38 anliegenden Druck anzeigt. An diesem Manometer 43 kann der Druck des angeschlossenen Vorratsbehälters 67 abgelesen werden und damit das Tankvolumen bestimmt werden. Diese Information ist beispielsweise im Service-Fall sehr wichtig.

An dem Auslass 35 der Sicherungseinrichtung 12 ist eine Zuführleitung 44 anschließbar. Diese Zuführleitung 44 weist einen Abzweig 45 auf, der zu einem Serviceventil 46 führt, um eine kontrollierte Entleerung und eine Entlüftung der Sicherungseinrichtung 12 vorzunehmen.

Die Umkehrosmose-Anlage 52 ist mit der Zuführleitung 44 zu der Sicherungseinrichtung 12 verbunden. Vorteilhafterweise kann in der Zuführleitung 44 eingangsseitig zur Umkehrosmose-Anlage 52 ein vorzugsweise manuell betätigbares Absperrventil 49 vorgesehen sein.

Die Umkehrosmose-Anlage 52 umfasst bevorzugt eine Filtergruppe 53 zum Schutz der Umkehrosmose-Membran mit aufeinanderfolgenden Filterstufen. Eine erste Filterstufe kann durch einen Sedimentfilter 54 mit einem Grobfiltersieb, beispielsweise mit 20 Mikron, ausgebildet sein. Die darauffolgende zweite Filterstufe kann als ein Aktivkohlefilter 55 ausgebildet sein. Die wiederum nachfolgende dritte Filterstufe kann als Sedimentfilter 56 mit einem Feinfiltersieb, beispielsweise 5 Mikron, ausgebildet sein. Die Zufuhrleitung 44 führt aus der Filtergruppe 53 heraus zu einem Membrangehäuse 58 mit einer Umkehrosmose-Membran, welche eine vierte Filterstufe darstellen kann. Vom Membrangehäuse 58 zweigt ein Ablauf 59 ab, der zu einem Durchflussbegrenzer 61 und nachfolgend ein Rückschlagventil 62 umfasst, um das in dem Membrangehäuse 58 erzeugte Abwasser abzuführen.

Aus dem Membrangehäuse 58 führt des Weiteren eine Permeatleitung 64 heraus. Diese Permeatleitung 64 ist über den Eingang 39 an der Sicherungseinrichtung 12 angeschlossen und führt über den Ausgang 41 wieder heraus. Die Permeatleitung 64 erstreckt sich von dem Membrangehäuse 58 sowie einem nachgeschaltenen Rückschlagventil 63 und dem Eingang 39 zum Druckschalter 38 und über den Ausgang 41 bis zu einem Verbindungsanschluss 65, insbesondere T-Verbinder, an welchem ein Vorratsbehälter 67 und ein Verbraucher 71 angeschlossen sind. Bei dem Verbraucher 71 kann es sich beispielsweise um einen Sterilisator (Autoklaven), einem Zapfhahn für Trinkwasserzwecke, einem Reinigungs- und Desinfektionsgerät (RDG oder auch Thermodesinfektor genannt) oder einem Wasserspender bei Zahnarztstühlen oder dergleichen handeln.

Zwischen dem Ausgang 41 und dem Verbindungsanschluss 65 kann bevorzugt eine Vollentsalzungspatrone 68 vorgesehen sein. Alternativ kann diese auch zwischen dem Vorratsbehälter 67 und dem Verbraucher 71 installiert werden. Dadurch kann das Permeat vollständig von Restmineralien befreit werden, wodurch vollentsalztes Wasser, auch VE-Wasser genannt, produziert werden kann.

Der Vorratsbehälter 67 umfasst bevorzugt ein Vorratsbehälter-Ventil und nimmt ein Permeat bzw. VE-Wasser unter Druck auf. Bei Betrieb des Verbrauchers 71 wird zunächst aus dem Vorratsbehälter 67 das Permeat bzw. VE-Wasser bereitgestellt, bis die Wasseraufbereitungsanlage 11 gestartet ist und Permeat erzeugt.

Zum Betrieb der Wasseraufbereitungsanlage 11 ist das Absperrventil 16 geöffnet und die Pumpe 30 startet, falls der Druck in der Permeatleitung 64 unterhalb des Rückschaltpunktes des Druckschalters 38 der Sicherungseinrichtung 12 liegt. Dann saugt die Pumpe 30 aus dem freien Auslauf 21 Speisewasser an und stellt dieses mit einem erhöhten Druck in dem Druckausgleichsbehälter 33 bereit. Von dort aus kann das unter Druck stehende Speisewasser bei einem geöffneten Absperrventil 49 über den Auslass 35 zur Filtergruppe 53 und zum zumindest einen Membrangehäuse 58 gelangen. Eine Membran in dem zumindest einen Membrangehäuse 58 entfernt über 90 % aller gelösten Teilchen im Wasser. Auch können Doppelmembran-Systeme eingesetzt werden. Das Permeat fließt über die Permeatleitung 64 zum Vorratsbehälter 67. Bei einem geschlossenen Verbraucher 71 wird der Vorratsbehälter 67 nach und nach gefüllt und der Druck im Vorratsbehälter 67 steigt exponentiell an und wirkt auf den Druckschalter 38 zurück. Diesen Druck kann man am Manometer 43 ablesen. Sobald ein eingestellter Abschaltdruck erreicht wird, schaltet dieser Druckschalter 38 die Pumpe 30 ab, das heißt, der Druckschalter 38 setzt die Pumpe 30 still. Dabei erlischt dann die optionale LED-Betriebskontrollleuchte für die Produktion. Aufgrund des Rückschlagventils 63, welches am Ausgang dem Membrangehäuses 58 in der Permeatleitung 64 ist, bleibt dieser Druck nur in dem Leitungsabschnitt der Permeatleitung 64 zwischen dem Absperrorgans Rückschlagventil 63 und dem Vorratsbehälter 67 und dem angeschlossen Verbraucher 71. Aufgrund des Stillsetzens der Pumpe 30 in der Sicherungseinrichtung 12 wird kein weiteres Speisewasser aus dem freien Auslauf 21 herausgefördert. Bei einer weiteren Zuführung des Trinkwassers wird nach Einnahme eines Betriebswasserspiegels 28 durch das Schwimmersystem 27 der Zulauf 22 automatisch abgeschaltet.

Aufgrund des unter Druck stehenden Speisewassers in dem Druckausgleichsbehälter 33 wird das bevorratete Speisewasser über die Zuführleitung 44 durch die Filtergruppe 53 und das Membrangehäuse 58 hindurchgedrückt und kann über den Ablauf 59 abfließen. Dadurch sind der gesamte Bereich und die Komponenten der Wasseraufbereitungsanlage 11 von der Ansauglanze 26 bis zum Ablauf 59 drucklos geschalten. Dadurch kann die Gefahr der Leckage erheblich reduziert werden. Außerdem kann auch eine dauerhafte Druckbelastung aller Komponenten sinken.

Sobald der Verbraucher 71 geöffnet bzw. betätigt wird, kann der Verbraucher 71 zunächst mit dem im Vorratsbehälter 67 bevorrateten Permeat bzw. VE-Wasser versorgt werden. Gleichzeitig sinkt jedoch der Druck in der Permeatleitung 64, welcher vom Druckschalter 38 erkannt wird. Sobald dieser Druck den Rückschaltpunkt des Druckschalters 38 erreicht, werden die Pumpe 30 und die optionale LED-Betriebskontrollleuchte für die Produktion eingeschalten, wodurch aus dem freien Auslauf 21 Speisewasser durch die Pumpe 30 abgesaugt und mit Überdruck in den Druckausgleichsbehälter 33 gefördert wird.

Sofern im Betrieb der Wasseraufbereitungsanlage 11 es zu einem Druckabfall im Trinkwassernetz oder zu einem Ausfall der Trinkwasserversorgung - beispielsweise durch ein versehentliches Abstellen der Wasserversorgung der Sicherungseinrichtung durch den Betreiber - kommt, wird durch den Druckschalter 18 der Druckabfall erkannt oder erfasst. Dies hat zur Folge, dass der freie Auslauf 21 nicht mehr mit hinreichender Menge an Trinkwasser versorgt wird, um einen Mindestbetriebswasserspiegel 28 bereitzustellen. Bei einem solchen Druckabfall wird die Pumpe 30 zur Sicherung der Wasseraufbereitungsanlage 11 durch den Druckschalter 18 abgeschaltet und ebenso werden die optionalen LED-Betriebskontrollleuchten für das Leitungswasser und zusätzlich die LED für die Produktion ausgeschalten. Außerdem verhindert der freie Auslauf 21 ein Rücksaugen von Speisewasser in das Trinkwassernetz.

Durch diese Sicherungseinrichtung 12 ist ermöglicht, dass geringe Fließraten zur Bereitstellung von Speisewasser am Auslass 35 bereitgestellt werden. Dabei wird die Fließrate durch die Leistung der Pumpe 30 determiniert.

Diese Wasseraufbereitungsanlage 11 weist den Vorteil auf, dass die Umkehrosmose-Anlage 52 frei von elektrischen Komponenten wie beispielsweise Hochdruckpumpe, Magnetventil für Kontrolle der Leitungswasserzufuhr, Tankdruckschalter und Niederdruckschalter als Trockenlaufschutz ausgebildet ist. Insbesondere kann auch auf das in herkömmlichen Umkehrosmose-Anlagen eingesetzte sog. automatische Abschaltventil (ASOV = automatic shut-off valve, hydraulisches Abschaltventil) verzichtet werden. Des Weiteren weist der Einsatz des Druckschalters 38 den Vorteil auf, dass es zu keinem Hydraulikgeräusch, wie es bei hydraulischen Abschaltventilen üblich ist, kommt.

Ein weiterer, großer Vorteil dieser Wasseraufbereitungsanlage 11 ist, dass mit dem Druckschalter 38 das maximale Volumen des im Vorratsbehälter gespeicherte Permeat bzw. VE-Wasser genau definiert werden kann und unabhängig vom Leitungswasserdruck immer gleich ist.

Des Weiteren weist die Anordnung des Druckschalters 38 in der Permeatleitung 64 den Vorteil auf, dass ein Nutzvolumen des an die Umkehrosmose-Anlage angeschlossenen Vorratsbehälters 67 vergrößert werden kann, da der Druckschalter 38 der Sicherungseinrichtung 12 später als ein klassisches, hydraulisches Abschaltventil abschaltet, beispielsweise bei einem Druck zwischen 4,1 und 4,3 bar. Dadurch stehen dem angeschlossenen Verbraucher 71 wesentlich mehr Permeat bzw. VE-Wasser zur Verfügung. Dies ist insbesondere für die Applikationen im Medizinbereich von Vorteil, welche häufig einen hohen Bedarf an VE-Wasser haben. Somit können also kleinere Umkehrosmose-Anlagen 52 mit einer geringeren Membrankapazität und somit einer kleineren Pumpe 30 in der Sicherungseinrichtung 12 verwendet werden. Dadurch können sich die Anschaffungskosten für die gesamte Wasseraufbereitungsanlage 11 reduzieren.

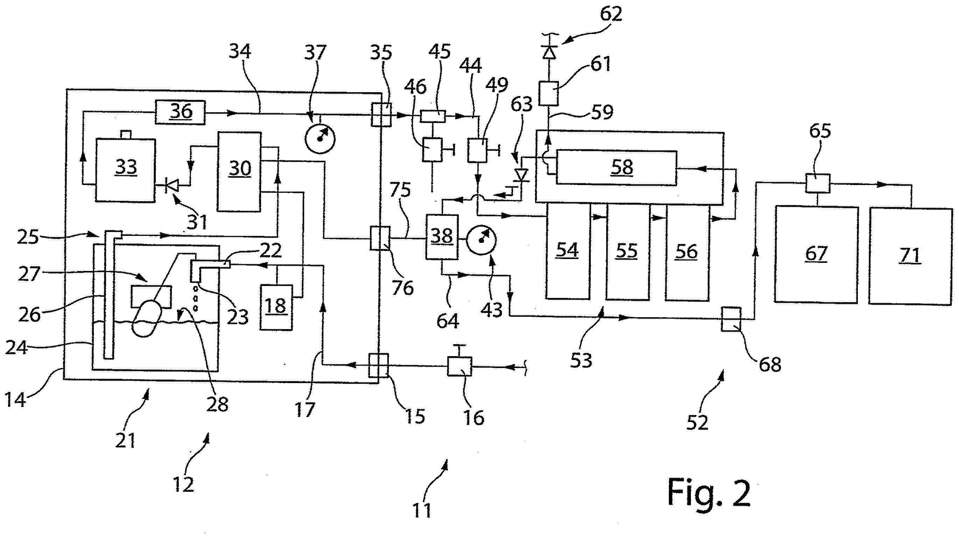

In Figur 2 ist eine schematische Darstellung einer Wasseraufbereitungsanlage 11 gemäß einer alternativen Ausführungsform zu Figur 1 dargestellt. Im Folgenden wird auf die Abweichung eingegangen. Im Hinblick auf die Übereinstimmungen kann auf die Ausführung zu Figur 1 vollumfänglich Bezug genommen werden.

Bei dieser alternativen Ausführungsform ist vorgesehen, dass der Druckschalter 38 nicht innerhalb des Gehäuses 14 der Sicherungseinrichtung 12, sondern in der Umkehrosmose-Anlage 52 vorgesehen ist. Die Position des Druckschalters 38 zwischen dem Absperrorgan 63 und dem Ventil 65, an welches der Vorratsbehälter 67 und der Verbraucher 71 anschließbar ist, bleibt gleich. Der Druckschalter 38 ist mittels einer elektrischen Steuerleitung 75 an einem Anschluss 76 im Gehäuse 14 der Sicherungseinrichtung 12 anschließbar. Dadurch kann ein Signal zum Stillsetzen oder Starten der Pumpe 30 in der Sicherungseinrichtung 12 übertragen werden. Diese Anordnung weist den Vorteil auf, dass der Eingang 39 und Ausgang 41 im Gehäuse 14 gegenüber der Ausführungsform in Figur 1 entfallen kann.

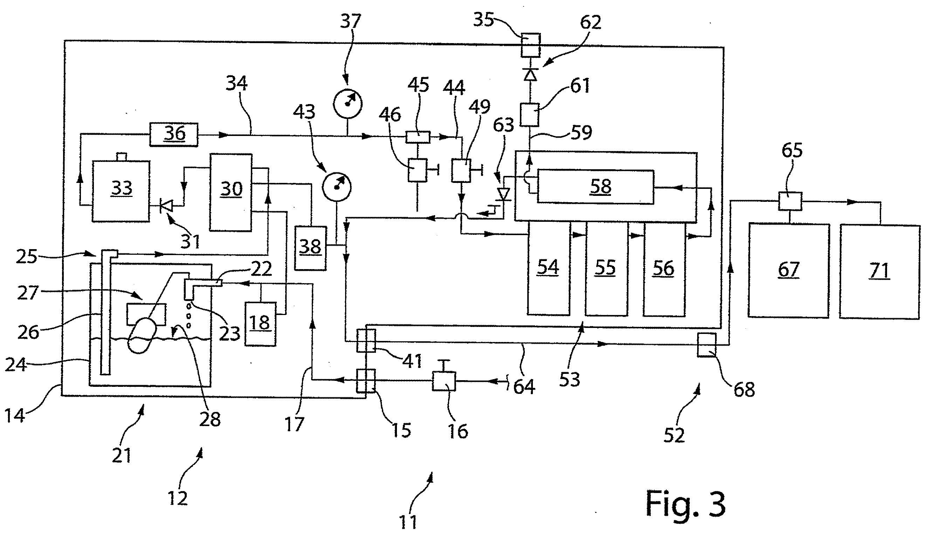

In Figur 3 ist eine weitere alternative Ausführungsform der Wasseraufbereitungsanlage 11 dargestellt. Bei dieser Wasseraufbereitungsanlage 11 ist vorgesehen, dass in dem Gehäuse 14 der Sicherungseinrichtung 12 gemäß Figur 1 auch die Umkehrosmose-Anlage 52 angeordnet bzw. integriert ist. Bei einer solchen Integration kann ein Eingang 39 am Gehäuse 14, wie dies bei der Ausführungsform gemäß Figur 1 vorgesehen ist, entfallen. Der Auslass 35 ist bei dieser alternativen Ausführungsform gemäß Figur 3 nunmehr dem Ablauf 59 zugeordnet. Der Auslass 35 ist im Ablauf 59 dem Durchflussbegrenzer 21 und darauffolgend dem Rückschlagventil 62 nachgeschalten.

Der Ausgang 41 zum Anschluss der Permeatleitung 64 bleibt erhalten. Ebenso der Anschluss 15 am Gehäuse 14 für die Zuführung des Trinkwassers.

Im Übrigen gelten die weiteren Ausführungen zu Figuren 1 und 2 auch für die Ausführungsform gemäß Figur 3.

## Patentansprüche

1. Wasseraufbereitungsanlage, insbesondere für Trinkwasser, welche aus
- einer Sicherungseinrichtung (12) zum Schutz von Trinkwasser gegen Verschmutzung durch Rückfließen und
- einer Umkehrosmose-Anlage (52) zur Aufbereitung der Trinkwasserqualität besteht,
- wobei die Sicherheitseinrichtung (12) umfasst: - ein Gehäuse (14), welches einen Einlass (15) zum Anschluss an ein Trinkwassernetz und einen Auslass (35) aufweist, einen in dem Gehäuse (14) vorgesehenen freien Auslauf (21), dessen Zulauf (22) mit dem Einlass (15) verbunden ist und dessen Auslauf (25) zu einer Pumpe (30) führt, welche das in dem freien Auslauf (21) drucklos bevorratete Speisewasser in einen Druckausgleichsbehälter (33) pumpt und mit Druck beaufschlagt, und eine vom Druckausgleichsbehälter (33) zum Auslass (35) führende Leitung (34),
- wobei die Umkehrosmose-Anlage (52) umfasst:
- eine Zuführleitung (44), welche über zumindest einen Vorfilter (54, 55, 56) zu einem Membrangehäuse (58) mit einer Membran führt, ein aus dem Membrangehäuse (58) herausführender Ablauf (59) zum Abführen von Abwasser und eine aus dem Membrangehäuse (58) abführende Permeatleitung (64) zum Abführen eines Permeats zu einem Vorratsbehälter (67) und/oder einem Verbraucher (71),
- wobei die Sicherungseinrichtung (12) und die Umkehrosmose-Anlage (52) durch einen Druckschalter (38) steuerbar sind, welcher einen Druck in der Permeatleitung (64) erfasst.

2. Wasseraufbereitungsanlage nach Anspruch 1, **dadurch gekennzeichnet, dass** beim Erreichen eines Solldruckwertes in der Permeatleitung (64) der Druckschalter (38) die Pumpe (30) stillsetzt oder bei einem Abfall des Drucks in der Permeatleitung (64) und beim Erreichen des Rückschaltpunktes des Druckschalters (38) die Pumpe (30) der Sicherungseinrichtung (12) wieder aktiviert.

3. Wasseraufbereitungsanlage nach Anspruch 1 oder 2, **dadurch gekennzeichnet, dass** bei einem geschlossenen Verbraucher (71) und einem vollen Vorratsbehälter (67) der Druckschalter (38) nach Erreichen des Solldruckwerts in der Permeatleitung (64) die Pumpe (30) stillsetzt.

4. Wasseraufbereitungsanlage nach Anspruch 3, **dadurch gekennzeichnet, dass** bei einer Wiederaktivierung der Pumpe (30) ein Druckaufbau in der Zuführleitung (44) erfolgt, wobei bedingt durch den anliegenden Druck im Vorratsbehälter (67), welcher exponentiell beim Befüllen des Vorratsbehälters (67) anwächst und gegen den Permeatdruck aus dem Membrangehäuse (58) drückt, der durch die Pumpe (30) erzeugte Druck in der Leitung (34) kontinuierlich ansteigt, bis der Vorratsbehälter (67) voll ist.

5. Wasseraufbereitungsanlage nach einem der vorhergehenden Ansprüche, **dadurch gekennzeichnet, dass** beim Erreichen des Solldruckwerts und nach einem Abschalten der Pumpe (30) das in dem Druckausgleichsbehälter (33) gespeicherte und unter Druck stehende Speisewasser über den Auslass (35) im Gehäuse (14) der Sicherungseinrichtung (12) und über die Zuführleitung (44) und dem zumindest einen Filter (54, 55, 56) und das Membrangehäuse (58) über den Ablauf (59) sich entleert.

6. Wasseraufbereitungsanlage nach einem der vorhergehenden Ansprüche, **dadurch gekennzeichnet, dass** der Druckschalter (38) im Gehäuse (14) der Sicherungseinrichtung (12) vorgesehen ist und die Permeatleitung (64) an einem zum Druckschalter (38) führenden Eingang (39) und an einem vom Druckschalter (38) abführenden Ausgang (41) im Gehäuse (14) der Sicherungseinrichtung (12) anschließbar ist, wobei zwischen dem Eingang (39) und dem Ausgang (41) der Druckschalter (38) sitzt.

7. Wasseraufbereitungsanlage nach einem der vorhergehenden Ansprüche, **dadurch gekennzeichnet, dass** zwischen dem Druckschalter (38) in der Permeatleitung (64) und dem Membrangehäuse (58) ein Rückschlagventil (63) vorgesehen ist, welches einen Durchgang in Richtung auf das Membrangehäuse (58) schließt.

8. Wasseraufbereitungsanlage nach einem der vorhergehenden Ansprüche, **dadurch gekennzeichnet, dass** im Ablauf (59) des Membrangehäuses (58) ein Durchflussbegrenzer (61) vorgesehen ist und vorzugsweise stromab zum Durchflussbegrenzer (61) ein Rückschlagventil (62) vorgesehen ist, welches einen Durchgang in Richtung zum Membrangehäuse (58) sperrt.

9. Wasseraufbereitungsanlage nach einem der vorhergehenden Ansprüche, **dadurch gekennzeichnet, dass** zumindest ein Sedimentfilter (54) mit einem Grobfiltersieb, ein Aktivkohlefilter (55) und ein Sedimentfilter (56) mit einem Feinfiltersieb vorgesehen ist, die vorzugsweise eine Filtergruppe (53) bilden.

10. Wasseraufbereitungsanlage nach einem der vorhergehenden Ansprüche, **dadurch gekennzeichnet, dass** die Umkehrosmose-Anlage (52) frei von elektrischen Komponenten und/oder zumindest einem hydraulischen Abschaltventil ist.

11. Wasseraufbereitungsanlage nach einem der Ansprüche 1 bis 5, **dadurch gekennzeichnet, dass** der Druckschalter (38) in der Permeatleitung (64) außerhalb des Gehäuses (14) der Sicherungseinrichtung (12) vorgesehen ist und eine elektrische Steuerleitung von dem Druckschalter (38) an dem Gehäuse (14) der Sicherungseinrichtung (12) zur Ansteuerung der Pumpe (30) anschließbar ist.

12. Wasseraufbereitungsanlage nach einem der vorhergehenden Ansprüche, **dadurch gekennzeichnet, dass** die Sicherungseinrichtung (12) und die Umkehrosmose-Anlage (52) in einem Gehäuse (14) angeordnet sind.

13. Wasseraufbereitungsanlage nach einem der vorhergehenden Ansprüche, **dadurch gekennzeichnet, dass** die Komponenten im Gehäuse (14) mit einer Steuerung überwachbar und/oder ansteuerbar sind und vorzugsweise eine Schnittstelle zur drahtlosen oder kabelgebundenen Datenübertragung vorgesehen ist.

14. Wasseraufbereitungsanlage nach einem der vorhergehenden Ansprüche, **dadurch gekennzeichnet, dass** an dem Gehäuse (14) eine Anzeige für einen Betriebszustand der Sicherungseinrichtung (12), für einen Schaltzustand des freien Auslaufs (21), für einen anliegenden Druck des Trinkwassers, für einen Betriebszustand der Pumpe (30) und/oder einen Füllstand des Druckausgleichsbehälters (33) vorgesehen ist.

15. Verfahren zum Aufbereiten von Wasser, insbesondere Trinkwasser, **dadurch gekennzeichnet, dass** das Wasser, insbesondere Trinkwasser, durch eine Wasseraufbereitungsanlage (11) nach einem der Ansprüche 1 bis 14 aufbereitet wird.
